# EUROPEAN PATENT APPLICATION

(11) **EP 4 787 572 A1**
(43) Date of publication of application: **05.08.2026**
(21) Application number: 26154700.4
(22) Date of filing: 28.01.2026
(51) Int. Cl.: H01M 50/211, H01M 50/289, H01M 50/293, H01M 50/505

(54) **BATTERY ASSEMBLY**

(30) Priority: 31.01.2025 KR 20250012393
(71) Applicant: SK On Co., Ltd., Seoul 03161 (KR)
(72) Inventor: HAN, Kyu Hyun, 34124 Daejeon (KR); HWANG, Won Gab, 34124 Daejeon (KR); KU, Bon Seok, 34124 Daejeon (KR); NA, Chae Won, 34124 Daejeon (KR); LEE, Gang U, 34124 Daejeon (KR)
(74) Representative: Prüfer & Partner mbB Patentanwälte · Rechtsanwälte

(57) **Abstract**

The present disclosure relates to a battery assembly, wherein the battery assembly according to one aspect may include: a plurality of battery cells; and a plurality of barriers, wherein the plurality of battery cells and the plurality of barriers may be stacked in a first direction to form a stack, wherein the plurality of barriers may include one or more first barriers and one or more second barriers, wherein a thickness of the first barrier may be from 25% to 200% of a thickness of the battery cells, and a thickness of the second barrier may be 10% or less of the thickness of the first barrier.

## Description

### BACKGROUND OF THE INVENTION

### 1. Field

The present disclosure relates to a battery assembly.

### 2. Description of the Related Art

A secondary battery is a battery configured to convert electrical energy into chemical energy and store the energy to be reused multiple times by charging and discharging, and a plurality of secondary batteries are grouped and manufactured into a battery assembly to obtain a desired output and performance. Such a battery assembly may include a plurality of secondary batteries, i.e., a plurality of battery cells, in an internal receiving space as described above.

If a thermal runaway event takes place in any one of the plurality of battery cells housed in the battery assembly, the heat or flame generated in the cell may easily propagate to neighboring cells, in which case a significant safety issue may arise due to the characteristics of secondary batteries.

On the other hand, in the prolonged use of a battery, at least some of a plurality of battery cells may expand during the charging and discharging process, for example due to gas generation by side reactions, and this phenomenon may be referred to as swelling. Swelling occurring in any battery cell may cause physical damage to neighboring cells.

To address this problem, attempts have been made to insert fire-resistant members or pressure-resistant members between adjacent battery cells. However, the insertion of such members may additionally increase the volume or weight of the battery assembly or reduce the energy density of the battery assembly.

### SUMMARY OF THE INVENTION

According to one aspect of the present disclosure, it is possible to provide a battery assembly which has an excellent effect of delaying or suppressing thermal runaway, effectively mitigates an impact by swelling phenomena, and secures a high energy density.

According to another aspect of the present disclosure, it is possible to provide a battery assembly which has improved safety and reliability, with a manufacturability and economic feasibility secured.

On the other hand, the present disclosure may be widely applied in the fields of electric vehicles, battery charging stations, energy storage systems (ESS), and other green technologies, such as photovoltaics and wind power utilizing batteries. The present disclosure may also be utilized in eco-friendly mobility including electric and hybrid vehicles to prevent climate change by curbing air pollution and greenhouse gas emissions.

A battery assembly according to the present disclosure may include: a plurality of battery cells; and a plurality of barriers, wherein the plurality of battery cells and the plurality of barriers may be stacked in a first direction to form a stack, wherein the plurality of barriers may include one or more first barriers and one or more second barriers, wherein a thickness of the first barrier may be from 25% to 200% of a thickness of the battery cells, and a thickness of the second barrier may be 10% or less of the thickness of the first barrier.

In the battery assembly according to an embodiment, the first barrier and the second barrier may each independently include at least one selected from the group consisting of a fiber, an inorganic material, and silicone.

In the battery assembly according to an embodiment, the first barrier may be formed in a multilayered structure including a barrier layer and a pressure-resistant layer.

In the battery assembly according to an embodiment, the barrier layer may include at least one selected from the group consisting of a fiber, an inorganic material, and silicone.

In the battery assembly according to an embodiment, a thickness of the barrier layer may be from 2% to 60% of a thickness of the battery cell.

In the battery assembly according to an embodiment, the pressure-resistant layer may include at least one selected from the group consisting of silicone, polyurethane (PU), acrylic, ethylene-propylene diene monomer (EPDM), ethylene vinyl acetate (EVA), isoprene rubber, butadiene-based rubber, chloroprene rubber, and butyl rubber.

In the battery assembly according to an embodiment, a thickness of the pressure-resistant layer may be from 5% to 150% of the thickness of the battery cell.

In the battery assembly according to an embodiment, the first barrier may be formed in a multilayered structure in which the barrier layer is interposed between the pressure-resistant layers.

In the battery assembly according to an embodiment, the sum of the thicknesses of the plurality of barriers may be from 5% to 20% of a thickness of the stack.

In the battery assembly according to an embodiment, the sum of the thicknesses of the one or more first barriers may be from 60% to 90% of the sum of the thicknesses of the plurality of barriers.

In the battery assembly according to an embodiment, the thickness of the second barrier may be 0.1 mm or greater.

In the battery assembly according to an embodiment, the thickness of the second barrier may be 3.5% or less of the thickness of the first barrier.

In the battery assembly according to an embodiment, the stack may include one or more battery cell units which are formed by stacking n battery cells in a first direction, wherein the one or more battery cell units are arranged in the first direction, wherein, between any two adjacent battery cell units along the first direction, any one of the plurality of barriers is inserted, wherein the n may be a natural number of 1 or greater.

In the battery assembly according to an embodiment, the stack may include a first region and a second region located adjacent to each of a first end and a second end along the first direction, and a third region located between the first region and second region, wherein, based on the thickness of the stack, the first region may be a region corresponding to a thickness of 15% to 25% from the first end, and the second region may be a region corresponding to a thickness of 15% to 25% from the second end, wherein at least one of the one or more first barriers may be arranged in the third region.

The battery assembly according to an embodiment may further include: a receiving case housing the plurality of battery cells and the plurality of barriers; and a busbar assembly including a busbar electrically connected to the plurality of battery cells and a busbar frame supporting the busbar.

According to one aspect of the present disclosure, it is possible to provide a battery assembly which has an excellent effect of delaying or suppressing thermal runaway, effectively mitigates an impact by swelling phenomena, and secures a high energy density.

According to another aspect of the present disclosure, it is possible to provide a battery assembly having improved safety and reliability, with a manufacturability and economic feasibility secured.

On the other hand, the present disclosure may be widely applied in the fields of electric vehicles, battery charging stations, energy storage systems (ESS), and other green technologies, such as photovoltaics and wind power that utilize batteries. The present disclosure may also be utilized in eco-friendly mobility including electric and hybrid vehicles to prevent climate change by curbing air pollution and greenhouse gas emissions.

### BRIEF DESCRIPTION OF THE DRAWINGS

Fig. 1 is a diagram illustrating an example of arrangement relationship between a battery cell and a barrier according to an embodiment of the present disclosure.
Fig. 2 is a diagram illustrating an example of cross-sectional view of a first barrier according to an embodiment of the present disclosure.
Fig. 3 is a diagram illustrating an example of cross-sectional view of a first barrier according to another embodiment of the present disclosure.
Fig. 4 is a diagram illustrating an example of cross-sectional view of a first barrier according to another embodiment of the present disclosure.
Fig. 5 is an enlarged diagram of region A of Fig. 1.
Fig. 6 is a diagram illustrating another example of arrangement relationship between a battery cell and a barrier according to an embodiment of the present disclosure.
Fig. 7 is a diagram illustrating an example of a battery assembly according to an embodiment of the present disclosure.
Fig. 8 is a diagram to schematically illustrate arrangement relationship among components forming a battery module used in Examples 1, 2 and Comparative Example 2.
Fig. 9 is a diagram schematically illustrating arrangement relationship among components forming a battery module used in Comparative Example 1.

### DETAILED DESCRIPTION

Embodiments described in the specification may be modified in many other forms and thus the technology according to an embodiment is not limited to embodiments described below. Further, throughout the specification, unless otherwise specifically stated, references to "including," "possessing," "containing," or "having" any component are not intended to exclude other components, but rather to indicate that other components may be further included, and are not intended to exclude elements, materials, or processes that are not additionally enumerated.

As used herein, equal or uniform may mean equal or uniform to each other within acceptable tolerances unless otherwise specified. For example, equal in composition or property measurements may encompass the meaning that two objects being compared are identical within a margin of error, not just exactly the same. On the other hand, having the same physical property measurements may mean that the difference in the measurements between the objects is approximately less than 5%, more specifically less than 3%, and more specifically less than 1%.

In the specification, an angle between two objects being perpendicular, or mutually parallel or aligned to each other may include not only being geometrically perpendicular or parallel, but also within a small margin of error.

As used herein, numerical ranges include lower and upper limits and all values within those ranges, increments logically derived from the shape and width of the range being defined, all values that are doubly bounded, and all possible combinations of upper and lower limits of numerical ranges bounded in different ways.

Unless otherwise defined herein, the term "about" may be considered to be a value within 30%, 25%, 20%, 15%, 10%, or 5% of the stated value.

The use of the terms "first," "second," "third," and the like before any component in this specification is intended to avoid confusion among components to which it refers, and is not intended to indicate any order, importance, or hierarchical relationship among the components. For example, the invention may be implemented that includes only a second component without a first component.

In this specification, terms "X-direction," "Y-direction," and "Z-direction" may be described based on a spatial orthogonal coordinate system by the X-axis, Y-axis, and Z-axis that are orthogonal to each other. Unless otherwise stated, the Z-direction (or a third direction) may refer to the height direction, the X-direction (or a first direction) may refer to any one of the directions perpendicular to the height direction, and the Y-direction (or a second direction) may refer to directions perpendicular to the Z-direction and the X-direction. However, the X-direction, Y-direction, and Z-direction referred below are for the purpose of describing the present disclosure to be clearly understood, and it is obvious that each direction may be defined differently depending on the standard.

In the present specification, the term "cross-section" may refer to a surface observed when a stacked object is cut in a direction perpendicular to the stacked surface.

In this specification, the term "electrically connected" may refer to, without limitation, any connection method by which a plurality of objects may be connected to each other to be electrically connected, and may be implemented in various ways, such as by directly connecting the plurality of objects to each other, or by connecting the objects via a third object.

The configuration defined as "unit" in this specification may refer to, without limitation, a single component or a set of two or more identical or similar components that share functional similarities, and the set of components may be configured by a non-limiting combination of hardware and/or software.

As used herein, the term "disposed" may refer to, without limitation, a positional relationship in which one object is positioned adjacent to another object. Non-limiting examples thereof may include coating one object on another object, bonding one object to another object using an adhesive, attaching one object by applying heat, pressure, or the like, or simply positioning or fixing objects to allow at least a portion of one object to come into contact with at least a portion of another object within any space.

In this specification, the term "covering" an object by another object may refer to, without limitation, a functional or structural relationship in which an object is arranged at least adjacent to the other object to block or mitigate any external factors that may be applied to the other object.

As used herein, the term "secondary battery" may refer to a battery that generates electrical energy by oxidation and reduction reactions when ions, more specifically cations such as lithium ions, are inserted and removed from a cathode and an anode. Specifically, the term "secondary battery" may refer to any one of a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, and an all-solid-state battery. For example, the term "secondary battery" as used herein may refer to a lithium-ion secondary battery, but is not necessarily limited thereto.

As used herein, the term "battery assembly" may be a generic concept that collectively refers to a battery module or a battery pack. Thus, a battery assembly according to the present disclosure may refer to a battery module, but may also refer to a battery pack that houses a plurality of battery cells, with omission of a battery module structure such as a cell to pack (hereinafter referred to as CTP).

As used herein, the term "battery cell" may refer to a basic unit of a secondary battery capable of charging and discharging electrical energy, including an electrode assembly, an electrolyte solution, and an outer shell as main components.

Hereinafter, the present disclosure will be described in detail. However, this is merely exemplary, and the present disclosure is not limited to the specific embodiments illustrated by way of example.

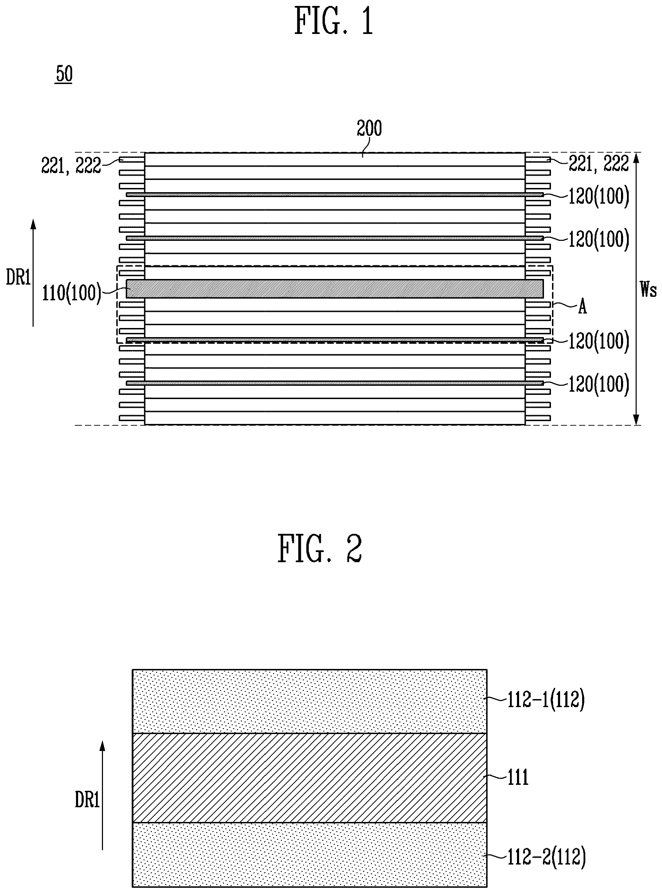

Fig. 1 is a diagram illustrating an example of arrangement relationship between a battery cells and a barrier, according to an embodiment of the present disclosure.

Referring to Fig. 1, a battery assembly according to one aspect of the present disclosure includes: a plurality of battery cells 200; and a plurality of barriers 100; wherein the plurality of battery cells 200 and the plurality of barriers 100 are stacked in a first direction DR1 to form a stack 50, wherein the plurality of barriers 100 include one or more first barriers 110 and one or more second barriers 120, wherein the thickness of the first barrier 110 is from 25% to 200% of the thickness of the battery cells 200, wherein the thickness of the second barrier 120 may be 10% or less of the thickness of the first barrier 110.

In an embodiment, the battery assembly may include a plurality of battery cells 200 and a plurality of barriers 100. In an exemplary embodiment, any one of the plurality of barriers 100 may be inserted between at least any two battery cells 200 that are adjacent to each other among the plurality of battery cells 200.

In an embodiment, each of the plurality of battery cells 200 may include a cell case 210, which is an outer shell that houses an electrode assembly (not shown) that produces or stores electrical energy, and lead tabs 221, 222 protruding from the cell case 210 to the outside of the cell case 210. The cell case 210 may have an internal space electrically connected to the lead tabs 221, 222 and may house the electrode assembly (not shown) producing and storing electrical energy therein.

In an embodiment, the electrode assembly (not shown) may include a cathode and an anode.

In an embodiment, the cathode may include a cathode collector and a cathode active material layer disposed on at least one side of the cathode collector.

In an embodiment, the cathode active material layer may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn), and aluminum (Al).

In an exemplary embodiment, the cathode active material may include a nickel-cobalt-manganese (NCM) lithium oxide.

In an exemplary embodiment, the content of nickel in the nickel-cobalt-manganese (NCM) lithium oxide (e.g., a mole fraction of nickel in a total mole of nickel, cobalt, and manganese) may be 0.8 to 0.95, 0.82 to 0.95, 0.83 to 0.95, 0.84 to 0.95, 0.85 to 0.95, or 0.88 to 0.95. In exemplary embodiments, the cathode active material including lithium oxide having a nickel content as in the numerical range described above may be defined as a high-nickel (high-Ni) cathode active material or a high-nickel cathode material.

In exemplary embodiments, the content of nickel in the nickel-cobalt-manganese (NCM) lithium oxide may be less than 0.8, 0.6 or greater, or 0.7 or greater. In an exemplary embodiment, the cathode active material including lithium oxide having a nickel content as in the numerical range described above may include a mid-nickel (mid-Ni) cathode active material or a mid-nickel cathode material.

In an embodiment, the anode may include an anode collector and an anode active material layer disposed on at least one side of the anode collector.

In an embodiment, the anode active material layer may include an anode active material. The anode active material may include a compound capable of reversibly intercalating and deintercalating lithium ions. The anode active material may include, for example, a carbon-based active material, a silicon-based active material, and/or a lithium metal active material.

According to an exemplary embodiment, the electrode assembly (not shown) may further include a separator to prevent an electrical short between the cathode and anode and generate the flow of ions. The separator may include, for example, a porous polymeric film or a porous nonwoven fabric.

In accordance with such embodiments, the electrode assembly (not shown) may have a structure in which the cathode, separator, and anode are stacked along a predetermined stacking direction. The cathode, separator, and anode may be stacked in a stacking, stack-folding, or Z-stacking manner.

In another embodiment, the electrode assembly (not shown) may have a structure that is wound after the cathode, separator, and anode are stacked one after the other. An electrode assembly (not shown) with such a wound structure may refer to an electrode assembly (not shown) referred to as a jelly roll, for example.

According to an exemplary embodiment, each of the battery cells 200 may house an electrolyte solution together inside the cell case 210 to immerse the electrode assembly (not shown).

According to another exemplary embodiment, each of the battery cells 200 may include a solid electrolyte layer that includes an electrolyte in a solid form. In accordance with such an embodiment, the electrode assembly (not shown) may have a structure in which the cathode, solid electrolyte layer, and anode are stacked along a predetermined stacking direction.

According to an exemplary embodiment, with reference to Fig. 1, the cell case 210 may be a film-like exterior material in a pouch form with at least a portion sealed. In other words, each of the battery cells 200 may be a pouch-type battery cell. However, this is exemplary and, unlike those shown in Fig. 1, the battery cells 200 may be a prismatic battery cell or a cylindrical battery cell.

Referring again to Fig. 1, the plurality of battery cells 200 may be stacked along a first direction DR1. Furthermore, any one of the plurality of barriers 100 may be disposed between at least one pair of battery cells 200 that are adjacent to each other among the plurality of battery cells 200 as described above. A stacked structure of such battery cells 200 and barriers 100 may be defined as a stack 50. Details of the stack 50 will be described later.

On the other hand, the shape, size, color, thickness, shade, width, number, etc. of each component illustrated in Fig. 1 above are arbitrarily shown for ease of explanation and may be varied as necessary without departing from the matters defined herein, thereby not limiting the scope of the patent claims.

In an embodiment, the plurality of barriers 100 may include a first barrier 110 and a second barrier 120. In an embodiment, the second barrier 120 may have a smaller thickness compared to the first barrier 110.

Any one of the plurality of barriers 100, including the first barrier 110 and the second barrier 120 as described above, may be inserted between any two adjacent battery cells 200 of the plurality of battery cells 200.

The plurality of barriers 100 may have insulating, heat-resistant, and fire-resistant properties, to suppress propagation of heat or flame. In addition, at least some of the plurality of barriers 100 may have a pressure resistance to be compressed upon application of an external force and restored upon termination of the external force application. This may mitigate or inhibit the propagation of heat or flame generated by ignition or explosion of any one or more of the plurality of battery cells 200 to neighboring battery cells 200, for example, along the stacking direction of the battery cells 200, thereby mitigating or suppressing the thermal runaway events taking place within the battery, and may also mitigate or offset the pressure applied onto neighboring cells by the physical deformation upon swelling in the battery cells.

In an embodiment, the thickness of the first barrier 110 may be from 25% to 200% of the thickness of the battery cell 200.

In a specific embodiment, the thickness of the first barrier 110 may be 27% or greater, 28% or greater, 30% or greater, or 31% or greater, or 190% or less, 185% or less, 183% or less, 180% or less, 177% or less, 175% or less, or 173% or less of the thickness of the battery cell 200.

Alternatively, In a specific embodiment, the thickness of the first barrier 110 may be 100% or greater, 105% or greater, 107% or greater, 110% or greater, 113% or greater, 115% or greater, 117% or greater, 120% or greater, 123% or greater, 125% or greater, 127% or greater, or 128% or greater, or 190% or less, 185% or less, 183% or less, 180% or less, 177% or less, 175% or less, or 173% or less.

In other words, there may be one or more first barriers 110 provided in the battery assembly, and a plurality of battery cells 200 may be provided. In this case, the plurality of battery cells 200 may have naturally the same thickness, in which case the thickness of the first barrier 110 may be from 25% to 200% of the thickness of any one of the plurality of battery cells 200. Alternatively, the plurality of battery cells 200 may each have a different thickness. In such an embodiment, the thickness of the first barrier 110 may be from 25% to 200% of the average thickness of each of the battery cells 200 in the plurality of battery cells 200.

In an exemplary embodiment, the thickness of the battery cells 200 may be from 1 mm to 50 mm. In an exemplary embodiment, the thickness of the battery cell 200 may be from 3 mm to 20 mm, from 5 mm to 15 mm, and from 7 mm to 15 mm, but is not necessarily limited thereto. In one example, the thickness of the battery cell 200 may be 8 mm, 8.5 mm, 9 mm, 9.5 mm, 10 mm, 10.5 mm, 11 mm, 12 mm, 13 mm, 13.3 mm, 13.3 mm, 13.5 mm, 13.7 mm, or 14 mm.

In an embodiment, the second barrier 120 may have a smaller thickness compared to the first barrier 110. In this embodiment, the first barrier 110 may include the barrier (or barriers) having a greater thickness than the second barrier 120 in the plurality of barriers 100. In other words, in the range of having a thickness of 25% to 200% of the thickness of the battery cell 200 as described above, the first barrier 110 may also include the "thicker barrier" in the plurality of barriers 100. The second barrier 120 may also include a "thin barrier" of the plurality of barriers 100. Accordingly, in the present disclosure, the plurality of barriers 100 may include two types of barriers, such as a thick barrier and a thin barrier.

In an embodiment, in the case that two or more first barriers 110 are provided, each may independently have a thickness of from 25% to 200% of the thickness of the battery cell 200. In this embodiment, at least some of the two or more first barriers 110 may have different thicknesses, in a range from 25% to 200% of the thickness of the battery cell 200, as described above.

Alternatively, in an embodiment, in the case that two or more of the first barriers 110 are provided, the first barriers 110 may all have substantially the same thickness, within a thickness range of 25% to 200% of the thickness of the battery cell 200.

In the case that the thickness of the first barrier 110 is less than the above-described numerical range, it may be difficult to expect mitigation or suppression of the thermal runaway event and/or the pressure resistant effect at the level desired in the present disclosure, and when exceeding the numerical range described above, it may be difficult to expect a significant improvement in the above-described effect compared to an increase in the thickness or weight of the first barrier 110, resulting in an inferior energy efficiency per volume and weight of the battery assembly including the first barrier.

With reference to Fig. 1, for example, the thickness of the plurality of battery cells 200, or the thickness of the first barrier 110 or second barrier 120, or the thickness of the stack 50 may refer to a length along the first direction DR1. In other words, it may refer to a length along the stacking direction.

In an embodiment, the first barrier 110 and the second barrier 120 may each independently include at least one selected from the group consisting of a fiber, an inorganic material, and silicone. In a specific embodiment, both the first barrier 110 and the second barrier 120 may include at least one selected from the group consisting of a fiber, an inorganic material, and silicone. The details of this will be described later.

Fig. 2 is a diagram illustrating an example of cross-sectional view of the first barrier according to an embodiment of the present disclosure.

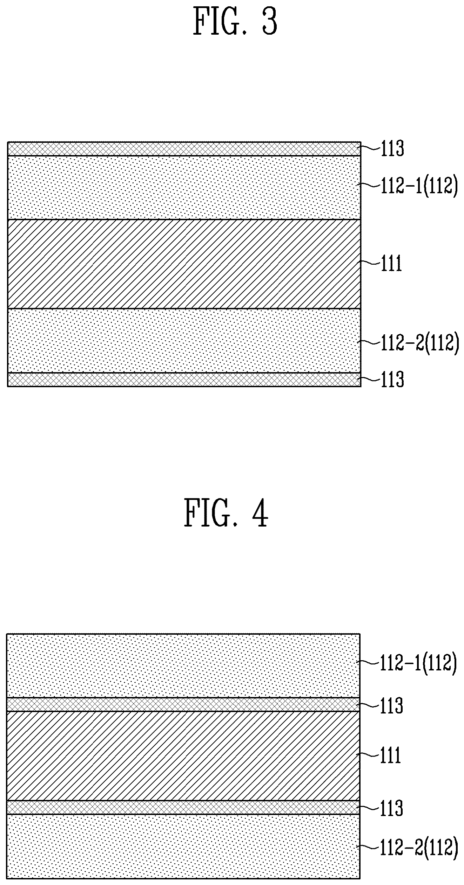

Fig. 3 is a diagram illustrating an example of cross-sectional view of the first barrier, according to another embodiment of the present disclosure.

Fig. 4 is a diagram illustrating an example of cross-sectional view of the first barrier, according to another embodiment of the present disclosure.

As described above, in an embodiment, the first barrier 110 may include at least one selected from the group consisting of a fiber, an inorganic material, and silicone. In an exemplary embodiment, the first barrier 110 may be formed in a single layer structure including the materials as described above.

Referring to Fig. 2, in an embodiment, the first barrier 110 may be formed in a multilayered structure including a barrier layer 111 and a pressure-resistant layer 112.

In an embodiment, the barrier layer 111 may have insulating, heat-resistant, and fire-resistant properties to suppress the propagation of heat or flame. Further, the barrier layer 111 may be configured to maintain the shape and rigidity of the first barrier 110.

In an embodiment, the barrier layer 111 may include at least one selected from the group consisting of a fiber, an inorganic material, and silicone.

In an embodiment, the fiber may include at least one of an inorganic material-based fiber or an organic material-based fiber.

In a specific embodiment, the inorganic material-based fiber may include at least one of silica fibers, alumina fibers, silica-alumina fibers, glass fibers, ceramic fibers, and basalt fibers, and the organic material-based fibers may include aramid fibers.

According to an exemplary embodiment, the fiber may have a form of a long fiber or a short fiber. In the case that the fiber has the form of long fibers, the barrier layer 111 may include a woven form in which the fibers are woven. With the woven form, the barrier layer 111 may include, but is not necessarily limited to, a woven or NCF fabric. In one aspect, the short fiber may correspond to fibers that do not include long fibers. Furthermore, the diameter, length, and the like of the long and/or short fibers may not be particularly limited.

In an embodiment, the inorganic material may include at least one selected from the group consisting of mica, silica, alumina, aluminum hydroxide, magnesium hydroxide, diatomite, and aerogel. In an embodiment, the inorganic material may include mica.

In an exemplary embodiment, the inorganic material may refer to mica. In this embodiment, the barrier layer 111 may include a mica sheet.

In an exemplary embodiment, the barrier layer 111 may include silicone. In this embodiment, the barrier layer 111 may include a silicone pad. In a particular embodiment, the barrier layer 111 may include a cured silicone pad.

In an embodiment, the thickness of the barrier layer 111 may be from 2% to 60% of the thickness of the battery cell 200.

Upon thermal runaway events taking place in the battery assembly in a range that the thickness of the barrier layer 111 is less than the above-described numerical range, it may be difficult to expect the effect of mitigating or suppressing the thermal runaway event at the level desired in this disclosure; when exceeding the numerical range described above, it is difficult to expect a significant improvement in the aforementioned effect compared to an increase in the thickness or weight of the first barrier 110, thereby leading to degradation in the energy efficiency per volume and weight of the battery assembly including the barrier layer; or, as the thickness of the barrier layer 111 becomes excessive compared to the overall thickness of the first barrier 110, the pressure-resistant effect on the pressure applied to the adjacent battery cell 200 upon occurrence of swelling may become inferior.

In an embodiment, in the case that swelling occurs in any one of the battery cells 200 due to continuous use of the battery, or the battery cells 200 expand for other reasons, the pressure-resistant layer 112 may perform a pressure-resistant function to relieve and/or offset pressure applied onto neighboring battery cells 200 by physical deformation thereby. To this end, the pressure-resistant layer112 may include an elastic material that compresses upon application of an external force and restores upon termination of the external force application.

In an embodiment, the pressure-resistant layer 112 may include at least one selected from the group consisting of silicone, polyurethane (PU), acrylic, ethylene-propylene diene monomer (EPDM), ethylene vinyl acetate (EVA), isoprene rubber, butadiene-based rubber, chloroprene rubber, and butyl rubber.

In an exemplary embodiment, the butadiene-based rubber may include at least one of butadiene rubber (BR), styrene butadiene rubber (SBR), and acrylonitrile butadiene rubber (NBR). In an embodiment, the pressure-resistant layer 112 may include silicone. In an exemplary embodiment, the pressure-resistant layer 112 may include expanded silicone foam.

In an embodiment, the thickness of the pressure-resistant layer 112 may be from 5% to 150% of the thickness of the battery cell 200.

In the case that the thickness of the pressure-resistant layer 112 is below the numerical range described above, it may be difficult to expect pressure-resistant effects to the level desired in the present disclosure; when exceeding the numerical range described above, it may be difficult to expect significant improvement in the effect described above compared to an increase in the thickness or weight of the first barrier 110, resulting in degradation in the energy efficiency per volume and weight of the battery assembly including the same; or, due to an excessive thickness of the pressure-resistant layer 112 relative to the overall thickness of the first barrier 110, it may be difficult to expect the effect of mitigating or suppressing the thermal runaway event at the level desired in the disclosure.

Referring again to Fig. 2, in an embodiment, the first barrier 110 may be formed in a multilayered structure in which the barrier layer 111 is interposed between the pressure-resistant layer 112. In this embodiment, the first barrier 110 may be formed in a multilayered structure in which the pressure-resistant layer 112 and the barrier layer 111 are stacked.

In this embodiment, referring to Fig. 2, the pressure-resistant layer 112 may be divided into a first pressure-resistant layer 112-1 and a second pressure-resistant layer 112-2. In an embodiment, the first barrier 110 may be formed in a multilayered structure in which the first pressure-resistant layer 112-1, the barrier layer 111, and the second pressure-resistant layer 112-2 are stacked one after another along the first direction DR1.

The first direction DR1 in Fig. 2 may be the same direction as the first direction DR1 described with reference to Fig. 1. In other words, in the battery assembly according to the present disclosure, the direction in which the battery cell 200 and/or the barrier 100 are stacked in the stack 50 and the direction in which the pressure-resistant layer 112 and the barrier layer 111 are stacked may be the same.

On the other hand, as an example with reference to Fig. 2, the thickness of the barrier layer 111 or the thickness of the pressure-resistant layer 112 as described above may refer to a length along the first direction DR1. In other words, it may refer to a length along the stacking direction. As shown in Fig. 2, when the pressure-resistant layer 112 is divided into a first pressure-resistant layer 112-1 and a second pressure-resistant layer 112-2, the thickness of the pressure-resistant layer 112 may refer to the thickness that is the sum of the thicknesses of the first pressure-resistant layer 112-1 and the thickness of the second pressure-resistant layer 112-2.

Meanwhile, referring to Figs. 3 and 4, in an embodiment, the first barrier 110 may further include a functional layer 113 in addition to the pressure-resistant layer 112 and the barrier layer 111.

The functional layer 113 may further add extra functionality to the first barrier 110. In an exemplary embodiment, the functional layer 113 may include any one of a protective layer and an expansion layer, or both.

In an embodiment, the protective layer may further enhance the effectiveness of the first barrier 110 in blocking the propagation of heat or flame or may function to protect the pressure-resistant layer 112 from heat or flame. In this embodiments, the protective layer may include a material having insulating, heat-resistant, and/or fire-resistant properties.

In an embodiment, the expansion layer may function to block a path of heat or flame by expanding upon contact with heat or flame. In this embodiment, the expansion layer may include a material that has insulating, heat-resistant, and/or fire-resistant properties, while being expandable upon contact with heat or flame. In an exemplary embodiment, the material that may be included in the expansion layer may include at least one selected from the group consisting of expanded graphite, silicates, and phosphorus-based flame retardants.

In an exemplary embodiment, the expansion layer may expand to a volume of 300% to 30,000% at 200°C to 300°C relative to the volume at room temperature.

As shown in Fig. 3, in an embodiment, the functional layer 113 may be formed on the pressure-resistant layer 112.

In an exemplary embodiment, in the case that the functional layer 113 is formed on the pressure-resistant layer 112, the pressure-resistant layer 112 may be protected by the functional layer 113. In an exemplary embodiment, heat or flames generated during a thermal runaway event may propagate between the battery cells 200 with high temperatures of 1,000°C to 1,100°C and strong pressure. On the other hand, due to the material properties of the pressure-resistant layer 112, structural deformation may be observed at temperatures above 400°C. Therefore, in the numerical range as above, the dissipation of the pressure-resistant layer 112 upon occurrence of the thermal runaway event may be preemptively suppressed, and furthermore, the effect of blocking the propagation of heat or flame of the first barrier 110 may be further reinforced by increasing the density due to expansion by an endothermic reaction.

As shown in Fig. 4, in an embodiment, the functional layer 113 may be interposed between the pressure-resistant layer 112 and the barrier layer 111.

In an exemplary embodiment, in the case that the functional layer 113 is interposed between the pressure-resistant layer 112 and the barrier layer 111, it is possible to further enhance the heat or fire resistance of the first barrier 110. In an exemplary embodiment, the expansion layer may expand to a volume of 300% to 30,000% at 200°C to 300°C, compared to the volume at room temperature, to lead to expansion before and after the point at which the outermost pressure-resistant layer 112 is dissipated by high temperature or high heat, thereby compensating for the area where the pressure-resistant layer 112 is dissipated.

In an embodiment, the second barrier 120 may be formed in a multilayered structure that includes a barrier layer and a pressure-resistant layer. Additionally, the multilayered second barrier 120 may further include a functional layer.

Like the first barrier 110 described above, the second barrier 120 may also be formed in a single layer structure, or it may be formed in a multilayered structure that further includes a barrier layer, a pressure-resistant layer, and optionally a functional layer.

If the second barrier 120 is formed in a multilayered structure, the description of the barrier layer, the pressure-resistant layer and/or the functional layer included therein may be applied as described above with reference to FIGS. 2 to 4, except description with respect to the thickness, such that the redundant description will be omitted hereinafter.

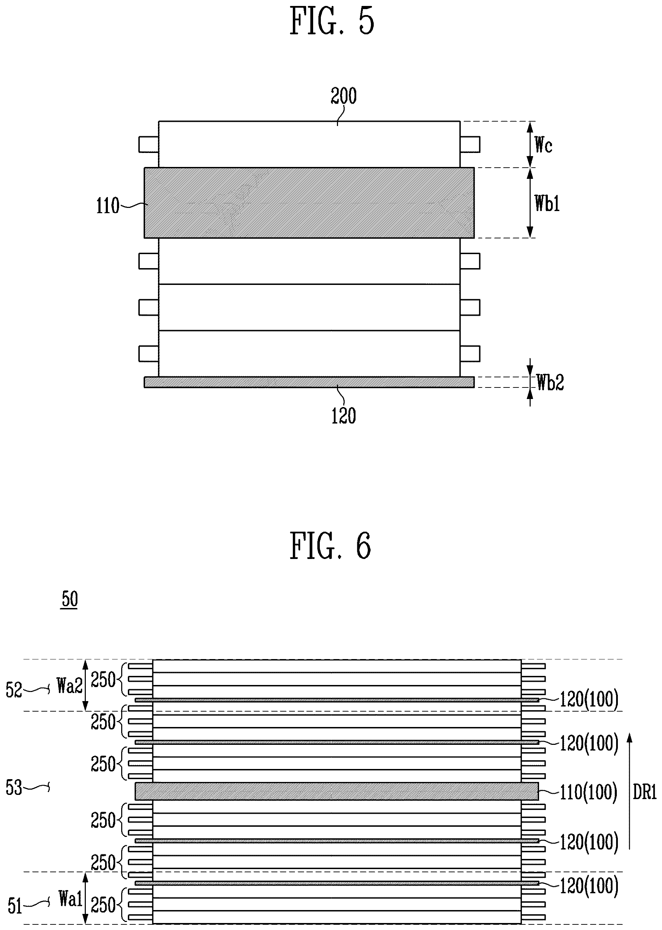

Fig. 5 is an enlarged diagram of region A of Fig. 1.

As described above, in an embodiment, the thickness Wb1 of the first barrier 110 may be 25% to 200% of the thickness Wc of the battery cell 200, and the second barrier 120 may have a smaller thickness compared to the first barrier 110, but the thickness Wb2 of the second barrier 120 may be 10% or less of the thickness Wb1 of the first barrier 110.

Referring now to Fig. 1, in an embodiment, the plurality of battery cells 200 and the plurality of barriers 100 may be stacked in a first direction DR1 to form a stack 50. As described above, any one of the plurality of barriers 100 may be disposed between at least one pair of battery cells 200 adjacent to each other among the plurality of battery cells 200, and the stack 50 may include a stacked structure of such battery cells 200 and barriers 100.

Referring to Figs. 1 and 5, in an embodiment, the sum of the thicknesses of the plurality of barriers 100 may be from 5% to 20% of the thickness Ws of the stack 50.

As described above, the plurality of barriers 100 may include one or more first barriers 110 and one or more second barriers 120. In such embodiments, the sum of the thickness of the plurality of barriers 100 may refer to the sum of the thicknesses Wb1 of the one or more first barriers 110 and the sum of the thicknesses Wb2 of the one or more second barriers 120.

In an embodiment, the sum of the thicknesses of the plurality of barriers 100 and the sum of the thicknesses Wc of the plurality of battery cells 200 may be equal to the thickness Ws of the stack 50.

If the sum of the thicknesses of the plurality of barriers 100 is less than the numerical range described above, it may be difficult to achieve effects of mitigating or suppressing thermal runaway event and/or pressure-resistant effects to a level desired in the present disclosure, and when exceeding the numerical range described above, the energy efficiency per volume and weight of the battery assembly may become inferior.

In a specific embodiment, the sum of the thicknesses of the plurality of barriers 100 may be 6% or greater, 7% or greater, 8% or greater, 9% or greater, 10% or greater, 11% or greater, 12% or greater, or 13% or greater, 19% or less, 18% or less, or 16% or less of the thickness Ws of the stack 50. Within the numerical ranges described above, it is possible to secure more improved effects of mitigating and suppressing thermal runaway events and/or pressure-resistant effects, while still exhibiting high energy efficiency.

Referring again to Figs. 1 and 5, in an embodiment, the sum of the thicknesses Wb1 of the one or more first barriers 110 may be from 60% to 90% of the sum of the thicknesses of the plurality of barriers 100.

In a specific embodiment, the sum of the thicknesses Wb1 of the one or more first barriers 110 may be 63% or greater, 65% or greater, 67% or greater, 69% or greater, 70% or greater, 71% or greater, 72% or greater, 73% or greater, 73.5% or greater, or 74% or greater, 89% or less, 88% or less, 87% or less, or 86.5% or less of the sum of the thicknesses of the plurality of barriers 100.

In an embodiment, in the case that only one first barrier 110 is included in the plurality of barriers 100, the thickness Wb1 of the first barrier 110 when only one barrier is included may be 60% to 90% of the sum of the thicknesses of the plurality of barriers 100, specifically 63% or greater, 65% or greater, 67% or greater, 69% or greater, 70% or greater, 71% or greater, 72% or greater, 73% or greater, 73.5% or greater, or 74% or greater, 89% or less, 88% or less, 87% or less, or 86.5% or less.

Further, in the case that two or more first barriers 110 are included in the plurality of barriers 100, the sum of the thicknesses Wb1 of the two or more first barriers 110 included may be from 60% to 90% of the sum of the thicknesses of the plurality of barriers 100, specifically, from 63% or greater, 65% or greater, 67% or greater, 69% or greater, 70% or greater, 71% or greater, 72% or greater, 73% or greater, 73.5% or greater, or 74% or greater, or 89% or less, 88% or less, 87% or less, or 86.5% or less.

It is possible to ensure more excellent effects of mitigating or suppressing thermal runaway events and/or pressure-resistant effects in the case that the sum of the thicknesses of the one or more first barriers 110 is within the numerical ranges described above.

Referring again to Figs. 1 and 5, in an embodiment, the thickness Wb2 of the second barrier 120 may be 10% or less of the thickness Wb1 of the first barrier 110.

In the structure of the stack 50 illustrated in Figs. 1 and 5, the first barrier 110 and the second barrier 120 may be included. Meanwhile, the thickness Wb2 of the second barrier 120 may be 10% or less of the thickness Wb1 of the first barrier 110.

In an exemplary embodiment, the propagation of heat or flame may be substantially delayed or blocked by the first barrier 110 that has a thickness of 25% to 200% of the thickness Wc of the battery cell 200 as described above. If the second barrier 120 and the first barrier 110 have a thickness ratio within the numerical range described above, the propagation of heat or flame may further be delayed or blocked more effectively, such that it is possible to further improve safety with reduction in the volume or weight of the barrier 100 in the stack 50, thereby securing superior energy efficiency. If the thickness Wb2 of the second barrier 120 exceeds 10% of the thickness Wb1 of the first barrier 110, the delay or suppression of heat or flame propagation described above may be inferior compared to the case where the total thickness of the barriers is the same with inclusion of barriers of the same thickness.

In a specific embodiment, the thickness Wb2 of the second barrier 120 may be 9.5% or less, 9% or less, 8.5% or less, 8% or less, 7.5% or less, 7% or less, 6.5% or less, 6% or less, 5.5% or less, or 5% or less of the thickness Wb1 of the first barrier 110. In such embodiments, the effect of delaying or blocking heat or flame propagation may be further improved.

In an embodiment, the thickness Wb2 of the second barrier 120 may be 3.5% or less of the thickness Wb1 of the first barrier 110.

In an exemplary embodiment, the propagation of heat or flame may be substantially delayed or blocked by the first barrier 110 that has a thickness of 25% to 200% of the thickness Wc of the battery cell 200 as described above. On the other hand, in the case that the second barrier 120 and the first barrier 110 have a thickness ratio in the numerical range described above, the propagation of heat or flame may be further delayed or blocked more effectively universally for the use of both high-nickel cathode material or mid-nickel cathode material as a cathode, thereby further improving versatility and safety.

In a specific embodiment, the thickness Wb2 of the second barrier 120 may be 3.3% or less, 3% or less, 2.8% or less, 2.7% or less, 2.5% or less, 2.4% or less, or 2.3% or less of the thickness Wb1 of the first barrier (110). In this embodiment, the effect of delaying or blocking heat or flame propagation may be further improved.

Referring again to Figs. 1 and 5, in an embodiment, the thickness Wb2 of the second barrier 120 may be 0.1 mm or greater.

In an exemplary embodiment, if the thickness Wb2 of the second barrier 120 is less than 0.1 mm, the thickness may be too low to have a significant effect of delaying or inhibiting heat or flame propagation, and thus may not secure safety improvement to a level desired by the present disclosure.

In an embodiment, in the case that the second barrier 120 is formed in a multilayered structure including a barrier layer and a pressure-resistant layer, the thickness Wb2 of the second barrier 120 may be 0.2 mm or greater.

In an exemplary embodiment, if the second barrier 120 has a thickness of less than 0.2 mm when formed in a multilayered structure as described above, the structural stability may be inferior or the manufacturability of the second barrier 120 may be inferior.

Fig. 6 is a diagram illustrating another example of arrangement relationship between the battery cell and barrier according to an embodiment of the present disclosure.

Referring to Fig. 6, in an embodiment, the stack 50 may include one or more battery cell units 250 formed by stacking n battery cells 200 in a first direction DR1, wherein the one or more battery cell units 250 are arranged in the first direction DR1 such that, between any two adjacent battery cell units 250 along the first direction DR1, any one of the plurality of barriers 100 may be inserted, where the n may be a natural number greater than or equal to 1.

In an embodiment, in the plurality of battery cells 200, n battery cells 200 may form a single battery cell unit 250. The battery cell unit 250 may be in the form in which the n battery cells 200 as described above are stacked in the first direction DR1. In other words, the battery cell unit 250 may include n battery cells 200 that are stacked in the same direction as the stacking direction of the stack 50.

The n may be any natural number among those greater than or equal to 1, where the battery cell unit 250 may represent a unit of battery cell configurations that are arbitrarily set according to a user request, and may have various configurations as desired within the foregoing definition. Such a battery cell unit 250 may also be represented as a logical.

In an embodiment, one or more battery cell units 250 may be provided. The one or more battery cell units 250 provided may all include an equal number of battery cells 200, but at least some thereof may include a different number of battery cells 200, as required.

In an embodiment, in the stack 50, one or more of the battery cell units 250 may be arranged in the first direction DR1. In this case, between any two neighboring battery cell units 250 along the first direction DR1, any one of the plurality of barriers 100 may be inserted.

In this embodiment, the stack 50 may be formed in a structure in which the battery cell units 250 and any one of the plurality of barriers 100 are alternately stacked along the first direction DR1.

Referring again to Fig. 6, in an embodiment, the stack 50 may include a first region 51 and a second region 52 located adjacent to a first end and a second end, respectively, along the first direction DR1, and a third region 53 located between the first region 51 and the second region 52, wherein, based on a thickness Ws of the stack 50, the first region 51 is a region corresponding to a thickness Wa1 of 15% to 25% from the first end, the second region 52 is a region corresponding to a thickness Wa2 of 15% to 25% from the second end, and in the third region 53 at least one of the one or more first barriers 110 may be arranged.

In an embodiment, the stack 50 may be divided into a first region 51, a second region 52, and a third region 53. In an exemplary embodiment, the stack 50 may be divided into a first region 51, a third region 53, and a second region 52 sequentially along the advancement direction of the first direction DR1.

In the stack 50, the shortest path connecting the first and second ends may extend in the same direction as the first direction DR1.

In an embodiment, the first region 51 may be located adjacent to the first end, and the second region 52 may be located adjacent to the second end. In this embodiment, the first region 51 may have one or more battery cell units 250 and barriers 100 adjacent to the first end located in the stack 50, and the second region 52 may have one or more battery cell units 250 and barriers 100 adjacent to the second end located in the stack 50.

Referring to Fig. 6, in an embodiment, the first region 51 may refer to a region corresponding to a thickness Wa1 of 15% to 25% from the first end, based on the thickness Ws of the stack 50, and the second region 52 may refer to a region corresponding to a thickness Wa2 of 15% to 25% from the second end, based on the thickness Ws of the stack 50.

In an embodiment, the third region 53 may be located between the first region 51 and the second region 52. In other words, the third region 53 may represent a region that is located in a relatively central region of the stack 50. In this embodiment, the third region 53 may have one or more battery cell units 250 and barriers 100 located adjacent to the center of the stack 50.

In the embodiments described above, the first region 51 and second region 52 may include a first end region and a second end region of the stack 50, respectively, and the third region 53 may include a central region of the stack 50.

In an embodiment, the third region 53 may have one or more of the first barriers 110 disposed therein. In other words, at least one of the one or more first barriers 110 may be disposed in the third region 53.

Referring to Figs. 1 to 5, by including at least one of the first barriers 110 having the features as described above in the third region 53, it is possible to delay or block the propagation of heat or flame more easily from a probabilistic perspective in a situation where any one of the battery cells 200 forming the stack 50 randomly ignites or explodes, and furthermore, the delay or blocking effect may be achieved more easily from a probabilistic perspective even with a smaller number of first barriers 110, which may be more advantageous in terms of energy density.

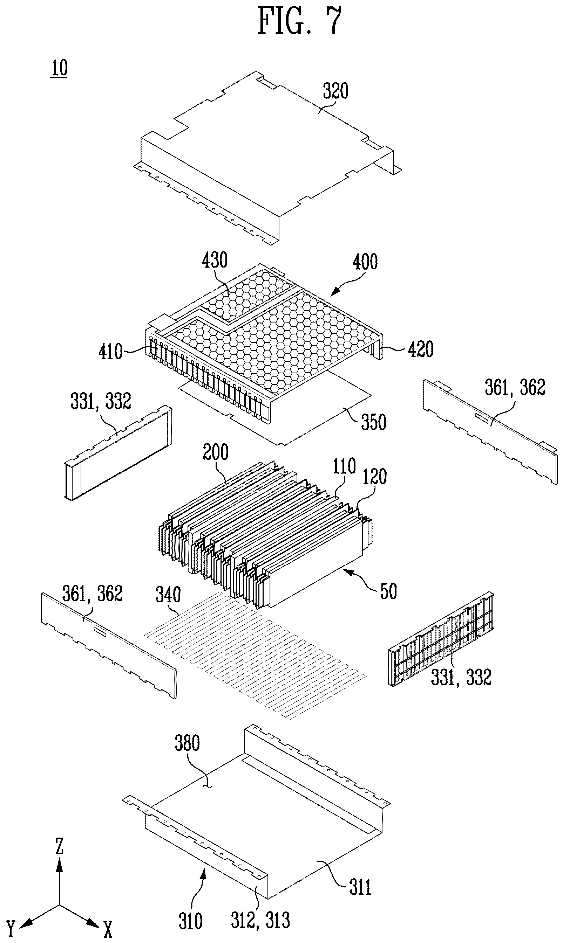

Fig. 7 is a diagram illustrating an example of a battery assembly according to an embodiment of the present disclosure.

Referring to Fig. 7, in an embodiment, the battery assembly 10 may further include: a receiving case 300 housing the plurality of battery cells 200 and the plurality of barriers 100; and a busbar assembly 400 including a busbar electrically connected to the plurality of battery cells 200 and a busbar frame supporting the busbar.

In an embodiment, the battery assembly 10 may further include a receiving case 300 that houses the plurality of battery cells 200 and the plurality of barriers 100.

Referring to Fig. 7, for example, the first direction DR1 described with reference to Figs. 1 to 6, i.e., the stacking direction above may be a direction aligned with the X direction in Fig. 7.

In an embodiment, the receiving case 300 may be configured to house a plurality of battery cells 200 and a plurality of barriers 100. In other words, in an embodiment, the receiving case 300 may be configured to house the stack 50.

In an embodiment, the receiving case 300 may include a receiving body 310 forming a part of a receiving space 380 that houses the plurality of battery cells 200 and the plurality of barriers 100, and a receiving cover 320 coupled to the receiving body 310 to form the receiving space 380 together.

In an embodiment, the receiving case 300 may further include a receiving body 310 that includes an open upper surface and houses the stack 50 through the open top surface, and a receiving cover 320 that is coupled to the receiving body 310 to close the open upper surface.

Accordingly, the receiving cover 320 may be coupled to the receiving body 310 to form an upper surface of the receiving space 380 or an upper surface of the receiving case 300. In other words, the receiving cover 320 may be coupled to the receiving body 310 to close the open upper surface and may form the receiving space 380 together with the receiving body 310.

In an embodiment, the receiving space 380 may include a space formed inside the receiving body 310 to house the stack 50.

In an embodiment, the receiving body 310 may be channel-shaped or "U" shaped with an open top surface. Referring to Fig. 7, the sides of the receiving body 310 that face each other along the X-direction may also be open.

In an embodiment, the receiving body 310 may include a body bottom surface 311 forming a bottom surface of the receiving space 380, and body side surfaces 312, 313 extending toward the receiving cover 320 from corners (not shown) of the body bottom surface 311 that are provided side-by-side along the X-direction. The free ends of the body side surfaces 312, 313 may be bent to form a flange (not shown). This may facilitate engagement with the receiving cover 320.

With reference to Fig. 7, the term "upper surface" in the above embodiments may refer to, without limitation, being located on one side of the Z-direction, i.e., in the +Z-direction with reference to Fig. 7.

In an embodiment, the battery assembly 10 may further include endplates 331, 332 at both ends of the stack 50 along the X-direction. In a specific embodiment, the endplates 331, 332 may be provided at both ends of the stack 50, or may be formed by being coupled to both sides of the receiving body 310. In an embodiment, the endplates 331, 332 may be configured to prevent both sides of the stack 50 from being exposed to the outside.

In an embodiment, the battery assembly 10 may further include other configurations necessary for operation of the battery assembly 10 in addition to the battery cells 200, barrier 100, and receiving case 300.

In an embodiment, the battery assembly 10 may include a busbar that is electrically connected to the plurality of battery cells 200.

In an embodiment, the battery assembly 10 may further include a busbar frame supporting the busbar and the plurality of battery cells 200.

In an embodiment, the configuration including the busbar and busbar frame may be referred to as a busbar assembly 400. In such a case, the busbar assembly 400 may include a busbar that is electrically connected to the plurality of battery cells 200.

In an embodiment, the busbar assembly 400 may be electrically connected to an external element and configured to store (or charge) electrical energy in the plurality of battery cells 200, or to supply (or discharge) electrical energy stored in the plurality of battery cells 200 to the external element. Further, the busbar assembly 400 may function to additionally support the stack 50, more specifically in the Z-direction as shown in Fig. 7.

In an embodiment, the busbar frame may include a first busbar frame 410 and a second busbar frame 420 extending along the X-direction with the stacks 50 interposed inbetween.

In an embodiment, the busbar frame may further include a support frame 430 located on one side of the busbar assembly 400 and connecting the first busbar frame 410 and the second busbar frame 420.

In an embodiment, the support frame 430 may be configured to support and prevent deformation of the first busbar frame 410 and the second busbar frame 420. Further, in an embodiment, the support frame 430 may be configured to support the stack 50 in the Z-direction as described above.

In an embodiment, a portion of the electrical device for sensing and controlling the plurality of battery cells 200 may be disposed on the support frame 430.

Referring to Fig. 7, in an embodiment, the shape of the busbar assembly 400 may be a tunnel shape.

In an embodiment, the support frame 430 may be connected to the first busbar frame 410 and the second busbar frame 420 to cover at least a portion of the stack 50 in the Z direction. Alternatively, the support frame 430 may be configured to cover all of the plurality of battery cells 200 in the Z-direction.

In an embodiment, the busbars may include a first busbar supported by the first busbar frame 410 and electrically connected to any one of the lead tabs 221, 222 of the battery cells 200 and a second busbar supported by the second busbar frame 420 and electrically connected to the other one of the lead tabs 221, 222 of the battery cells 200.

In an embodiment, the first busbar and the second busbar may each be located in a direction away from the plurality of battery cells 200 than the first busbar frame 410 and the second busbar frame 420. In other words, it may be located closer to the body side surfaces 312, 313 than the first busbar frame 410 and the second busbar frame 420. In this case, each of lead tabs 221, 222 of the battery cells 200 may be inserted into slit holes (not shown) formed in the first busbar frame 410 and the second busbar frame 420 to be electrically connected with the first busbar and the second busbar. However, this is not necessarily limited, and each of the lead tabs may be electrically connected to the first busbar and the second busbar by other means other than those described above if necessary.

In an embodiment, the battery assembly 10 may include insulating covers 361, 362 disposed by being interposed between the receiving case (specifically, the receiving body 310) and the busbar assembly 400 with respect to the Y direction of Fig. 7.

In an embodiment, the insulating covers 361, 362 may be configured to block electrical connections between the busbar or busbar assembly 400 and the receiving body 300. To this end, the insulating covers 361, 362 may have electrical insulation properties.

In an embodiment, each of the insulating covers 361, 362 may be located in a direction away from the battery cells 200 than the first busbar and the second busbar. In other words, each of the insulating covers 361, 362 may be located closer to the body side surfaces 312, 313 than the first busbar and the second busbar.

Referring to Fig. 7, in an embodiment, the battery assembly 10 may include a sheet-like cover pad 350 that is located between the support frame 430 and stack 50 to further suppress propagation of heat or flame in the Z-direction in the event of a thermal runaway in at least one of the plurality of battery cells 200.

In an embodiment, the cover pad 350 may have heat-insulating, heat-resistant, insulating, and fire-resistant properties to perform a function of suppressing the propagation of heat or flame.

In an embodiment, the cover pad 350 may include at least one of a wool, an insulating polymer, or an inorganic material.

In an embodiment, the battery assembly 10 may further include a heat dissipator 340 that is located between the body bottom surface 311 and the stack 50 to transfer heat generated from the plurality of battery cells 200 to the exterior of the battery assembly 10.

In an embodiment, the heat dissipator 340 may include an adhesive material having thermal conductivity.

In an embodiment, the heat dissipator 340 may bond the plurality of battery cells 200 onto the body bottom surface 311. To this end, the heat dissipator 340 may be in the form of a liquid composition that is sprayed or applied onto the body bottom surface 311 and then cured, or alternatively, may be formed in the form of a soft or rigid sheet.

While Fig. 7 is shown for illustrative purposes only, the battery assembly 10 is illustrated as an example of a battery module structure, but this is exemplary; and the battery assembly 10 according to the present disclosure may be applied, without limitation, to not only a battery pack, which has a structure combined with a module structure shown in Fig. 7 or a similar module structure, but also a cell to pack (CTP) structure that has the structure of battery cells 200, barriers 100, and a case, with omission of the typical battery module structure, and is directly housed in the form of a pack.

The battery assembly according to one aspect of the present disclosure may be preferably used as a power source for small devices, but may also be preferably used as a power source for medium to large devices. Examples of such small devices may include cell phones, laptop computers, cameras, and the like, and examples of such medium to large devices may include electric vehicles, hybrid electric vehicles, plug-in hybrid electric vehicles, power storage systems, and the like, but are not limited thereto.

It is understood by those skilled in the art that the plurality of exemplary embodiments described above are specific examples of the following aspects.

Aspect 1: A battery assembly comprising: a plurality of battery cells; and a plurality of barriers, wherein the plurality of battery cells and the plurality of barriers are stacked in a first direction to form a stack, wherein the plurality of barriers include one or more first barriers and one or more second barriers, wherein a thickness of the first barrier is from 25% to 200% of a thickness of the battery cells, and a thickness of the second barrier is 10% or less of the thickness of the first barrier.

Aspect 2: The battery assembly of Aspect 1, wherein the first barrier and the second barrier each independently include at least one selected from the group consisting of a fiber, an inorganic material, and silicone.

Aspect 3: The battery assembly of Aspect 1 or 2, wherein the first barrier is formed in a multilayered structure including a barrier layer and a pressure-resistant layer.

Aspect 4: The battery assembly of Aspect 3, wherein the barrier layer includes at least one selected from the group consisting of a fiber, an inorganic material, and silicone.

Aspect 5: The battery assembly of Aspect 3 or 4, wherein a thickness of the barrier layer is from 2% to 60% of a thickness of the battery cell.

Aspect 6: The battery assembly of any one of Aspects 3 to 5, wherein the pressure-resistant layer includes at least one selected from the group consisting of silicone, polyurethane (PU), acrylic, ethylene-propylene diene monomer (EPDM), ethylene vinyl acetate (EVA), isoprene rubber, butadiene-based rubber, chloroprene rubber, and butyl rubber.

Aspect 7: The battery assembly of any one of Aspects 3 to 6, wherein a thickness of the pressure-resistant layer is from 5% to 150% of the thickness of the battery cell.

Aspect 8: The battery assembly of any one of Aspects 3 to 7, wherein the first barrier is formed in a multilayered structure in which the barrier layer is interposed between the pressure-resistant layers.

Aspect 9: The battery assembly of any one of Aspects 1 to 8, wherein the sum of the thicknesses of the plurality of barriers is from 5% to 20% of a thickness of the stack.

Aspect 10: The battery assembly of any one of Aspects 1 to 9, wherein the sum of the thicknesses of the one or more first barriers is from 60% to 90% of the sum of the thicknesses of the plurality of barriers.

Aspect 11: The battery assembly of any one of Aspects 1 to 10, wherein the thickness of the second barrier is 0.1 mm or greater.

Aspect 12: The battery assembly of any one of Aspects 1 to 11, wherein the thickness of the second barrier is 3.5% or less of the thickness of the first barrier.

Aspect 13: The battery assembly of any one of Aspects 1 to 12, wherein the stack includes one or more battery cell units which are formed by stacking n battery cells in a first direction, wherein the one or more battery cell units are arranged in the first direction, wherein, between any two adjacent battery cell units along the first direction, any one of the plurality of barriers is inserted, wherein the n is a natural number of 1 or greater.

Aspect 14: The battery assembly of Aspect 13, wherein the stack includes a first region and a second region located adjacent to each of a first end and a second end along the first direction, and a third region located between the first region and second region, wherein, based on the thickness of the stack, the first region is a region corresponding to a thickness of 15% to 25% from the first end, and the second region is a region corresponding to a thickness of 15% to 25% from the second end, wherein at least one of the one or more first barriers is arranged in the third region.

Aspect 15: The battery assembly of any one of Aspects 1 to 14, further comprising: a receiving case housing the plurality of battery cells and the plurality of barriers; and a busbar assembly including a busbar electrically connected to the plurality of battery cells and a busbar frame supporting the busbar.

Hereinafter, embodiments of the present disclosure will be further described with reference to specific experimental examples. The examples and comparative examples included in the experimental examples are merely illustrative of the disclosure and are not intended to limit the scope of the appended patent claims; it will be apparent to those skilled in the art that various changes and modifications may be made to the embodiments within the scope and spirit of the present disclosure, and such changes and modifications fall within the scope of the appended patent claims.

### Examples

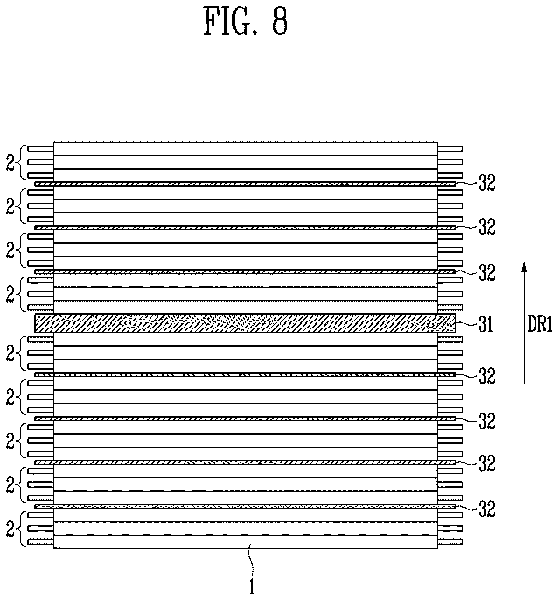

Fig. 8 is a diagram to schematically illustrate arrangement relationship of components of a battery module used in Examples 1, 2 and Comparative Example 2.

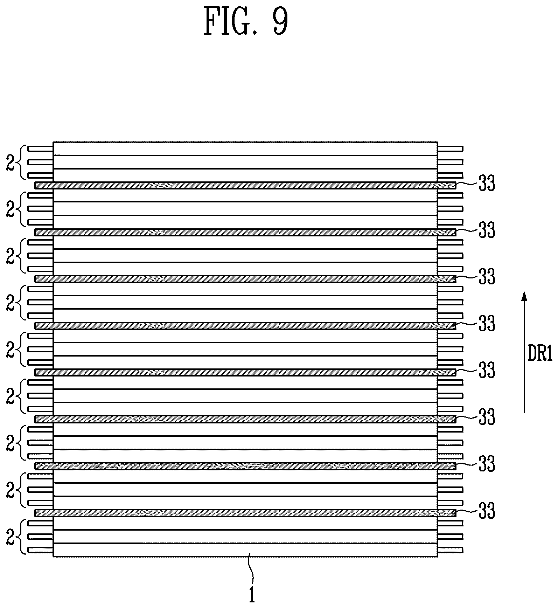

Fig. 9 is a diagram to schematically illustrate arrangement relationship of components including a battery module used in Comparative Example 1.

### 1. Example 1

27 pouch-type battery cells 1 with the same thickness were prepared, and then a stack was prepared in which three battery cells in a single battery cell unit 2 are stacked along the first direction DR1, with one battery cell unit 2 and one barrier (either a first barrier 31 or a second barrier 32) repeatedly arranged.

Specifically, the stack was configured in such a way that the first barrier 31 is disposed between the fifth battery cell unit 2 and the sixth battery cell unit 2 from a first end along the first direction DR1, and the second barrier 32 is disposed between the remaining battery cell units 2. A heating pad was attached to a main chamber of a battery cell 1 located first along the first direction DR1 in the configured stack.

A testing battery module was prepared by accommodating the stack configured above in a receiving case prepared in advance.

The configuration of the stack as described above may refer to the configuration shown in Fig. 8, where a value obtained by converting the thickness Wb1 of the first barrier 31 into a percentage relative to the thickness Wc of the battery cell 1, a value obtained by converting the thickness Wb2 of the second barrier 32 into a percentage relative to the thickness Wb1 of the first barrier 31, and a value obtained by converting the sum Wbt of the thickness Wb1 of the first barrier 31 and the thickness Wb2 of the second barrier 32 into a percentage relative to the thickness Ws of the stack are shown in Table 1 below.

### 2. Example 2

In Example 1, a testing battery module was prepared by performing the same procedure as in Example 1, except that only the thickness Wb1 of the first barrier 31 and the thickness Wb2 of the second barrier 32 were set to a predetermined thickness different from that of Example 1. The configuration of the stack as described above may refer to the configuration shown in Fig. 8, wherein, in Example 2, a value obtained by converting the thickness Wb1 of the first barrier 31 into a percentage relative to the thickness Wc of the battery cell 1, a value obtained by converting the thickness Wb2 of the second barrier 32 into a percentage relative to the thickness Wb1 of the first barrier 31, and a value obtained by converting the sum Wbt of the thickness Wb1 of the first barrier 31 and the thickness Wb2 of the second barrier 32 into a percentage relative to the thickness Ws of the stack are shown in Table 1 below.

### 3. Comparative Example 1

A testing battery module was prepared by performing the same procedure as in Example 1, except that barriers 33 having all the same thickness were used in Example 1.

The configuration of the stack as described above may be referred to the configuration shown in Fig. 9, where a value obtained by converting the thickness Wb3 of a barrier 33 into a percentage relative to the thickness Wc of the battery cell 1 and a value obtained by converting the sum Wbt of the thickness Wb3 of the barrier 33 into a percentage relative to the thickness Ws of the stack are shown in Table 1 below.

### 4. Comparative Example 2

In Example 2, a testing battery module was prepared by performing the same procedure as in Example 1, except that only the thickness Wb1 of a first barrier 31 and the thickness Wb2 of the second barrier 32 were set to the predetermined thickness different from that of Example 1. The configuration of the stack as described above may refer to the configuration shown in Fig. 8, where, in Comparative Example 2, a value obtained by converting the thickness Wb1 of the first barrier 31 into a percentage relative to the thickness Wc of the battery cell 1, a value obtained by converting the thickness Wb2 of the second barrier 32 into a percentage relative to the thickness Wb1 of the first barrier 31, and a value obtained by converting the sum Wbt of the thickness Wb1 of the first barrier 31 and the thickness Wb2 of the second barrier 32 into a percentage relative to the thickness Ws of the stack are shown together in Table 1 below.

**Table 1**

| | (Wb1/Wc)×100(%) | (Wb2/Wb1)×100(%) | (Wb3/Wc)×100(%) | (Wbt/Ws)×100(%) |
|---|---|---|---|---|
| Example 1 | 151.1 | 2.25 | - | 14.03 |
| Example 2 | 129.3 | 4.98 | - | 14.00 |
| Comparative Example 1 | - | - | 21.8 | 14.02 |
| Comparative Example 2 | 89.4 | 13.6 | - | 14.02 |

### Evaluation Example

The battery modules in the Examples and Comparative Examples were inserted into a testing jig, and an attached heating pad was heated to simulate a thermal runaway.

The time T1 taken for the battery cells and barriers in the stack to be completely combusted and the time T2 taken for the battery cells to be combusted were measured, and the performance of the barrier in delaying the thermal runaway was evaluated by comparing the T1-T2 values, which are shown in Table 2 below.

**Table 2**

| | (T1-T2)(sec) |
|---|---|
| Example 1 | 372.2 |
| Example 2 | 335.7 |
| Comparative Example 1 | 307.2 |
| Comparative Example 2 | 278.9 |

The evaluation results show that for Example 1 and Example 2, in which the first and second barriers are involved, where the thickness of the first barrier is 25% to 200% of the thickness of the battery cell and the thickness of the second barrier is 10% or less of the thickness of the first barrier, the performance for thermal runaway delay was improved compared to Comparative Example 1, in which only barriers of the same thickness were involved, where the total thickness of the barriers included is almost the same as for Example 1 and 2.

On the other hand, for Comparative Example 2, in which the first and second barriers are involved, where the thickness of the first barrier is 25% to 200% of the thickness of the battery cell and the thickness of the second barrier is greater than 10% of the thickness of the first barrier, the performance for thermal runaway delay is inferior compared to Comparative Example 1 as well as Examples 1 and 2.

It is speculated to be due to the fact that, if the total thickness of the barriers included the stack is substantially the same, the combination of a thicker first barrier and a thinner second barrier may lead to a non-linear increase in the performance for heat or flame propagation delay by the first barrier, resulting in a significant improvement in the performance for the thermal runaway delay; whereas, in the above case, it is speculated that, if the thickness of the second barrier exceeds 10% of the thickness of the first barrier, compared to a case that the improvement in the performance for the thermal runaway delay by the first barrier is not significant, the performance for thermal runaway delay by the second barrier is not so significant, such that the performance for thermal runaway delay becomes inferior compared to a case in which the barriers with a uniform thickness are adopted.

The description set forth above is merely an example of applying the principles of the present disclosure, and other configurations may further be included without departing from the scope of the present disclosure.

## Claims

1. A battery assembly comprising:
a plurality of battery cells; and
a plurality of barriers,
wherein the plurality of battery cells and the plurality of barriers are stacked in a first direction to form a stack,
wherein the plurality of barriers include one or more first barriers and one or more second barriers,
wherein a thickness of the first barrier is from 25% to 200% of a thickness of the battery cells, and
a thickness of the second barrier is 10% or less of the thickness of the first barrier.

2. The battery assembly of claim 1, wherein the first barrier and the second barrier each independently include at least one selected from the group consisting of a fiber, an inorganic material, and silicone.

3. The battery assembly of claim 1 or 2, wherein the first barrier is formed in a multilayered structure including a barrier layer and a pressure-resistant layer.

4. The battery assembly of claim 3, wherein the barrier layer includes at least one selected from the group consisting of a fiber, an inorganic material, and silicone.

5. The battery assembly of claim 3 or 4, wherein a thickness of the barrier layer is from 2% to 60% of a thickness of the battery cell.

6. The battery assembly of any one of claims 3 to 5, wherein the pressure-resistant layer includes at least one selected from the group consisting of silicone, polyurethane (PU), acrylic, ethylene-propylene diene monomer (EPDM), ethylene vinyl acetate (EVA), isoprene rubber, butadiene-based rubber, chloroprene rubber, and butyl rubber.

7. The battery assembly of any one of claims 3 to 6, wherein a thickness of the pressure-resistant layer is from 5% to 150% of the thickness of the battery cell.

8. The battery assembly of any one of claims 3 to 7, wherein the first barrier is formed in a multilayered structure in which the barrier layer is interposed between the pressure-resistant layers.

9. The battery assembly of any one of claims 1 to 8, wherein the sum of the thicknesses of the plurality of barriers is from 5% to 20% of a thickness of the stack.

10. The battery assembly of any one of claims 1 to 9, wherein the sum of the thicknesses of the one or more first barriers is from 60% to 90% of the sum of the thicknesses of the plurality of barriers.

11. The battery assembly of any one of claims 1 to 10, wherein the thickness of the second barrier is 0.1 mm or greater.

12. The battery assembly of any one of claims 1 to 11, wherein the thickness of the second barrier is 3.5% or less of the thickness of the first barrier.

13. The battery assembly of any one of claims 1 to 12, wherein the stack includes one or more battery cell units which are formed by stacking n battery cells in a first direction,
wherein the one or more battery cell units are arranged in the first direction,
wherein, between any two adjacent battery cell units along the first direction, any one of the plurality of barriers is inserted,
wherein the n is a natural number of 1 or greater.

14. The battery assembly of claim 13, wherein the stack includes a first region and a second region located adjacent to each of a first end and a second end along the first direction, and a third region located between the first region and second region,
wherein, based on the thickness of the stack, the first region is a region corresponding to a thickness of 15% to 25% from the first end, and the second region is a region corresponding to a thickness of 15% to 25% from the second end,
wherein at least one of the one or more first barriers is arranged in the third region.

15. The battery assembly of any one of claims 1 to 14, further comprising:
a receiving case housing the plurality of battery cells and the plurality of barriers; and
a busbar assembly including a busbar electrically connected to the plurality of battery cells and a busbar frame supporting the busbar.
